# EUROPÄISCHE PATENTSCHRIFT

(11) **EP 2 794 157 B1**
(45) Veröffentlichungstag und Bekanntmachung des Hinweises auf die Patenterteilung: **30.08.2023**
(21) Anmeldenummer: 12812268.6
(22) Anmeldetag: 21.12.2012
(51) Int. Cl.: B23B 51/04, B28D 1/04

(54) **BOHRKRONE MIT EINEM AUSTAUSCHBAREN SCHNEIDABSCHNITT**
DRILL BIT WITH AN EXCHANGEABLE CUTTING PORTION
COURONNE DE FORAGE AVEC SECTION DE COUPE INTERCHANGEABLE

(30) Priorität: 22.12.2011 DE 102011089546
(43) Veröffentlichungstag der Anmeldung: 29.10.2014
(73) Patentinhaber: HILTI Aktiengesellschaft, 9494 Schaan (LI)
(72) Erfinder: HOOP, Matthaeus, CH-9492 Eschen (LI); WEBER, Christoph, CH-6345 Neuheim (CH); EBERT, Joerg, 64293 Darmstadt (DE)
(74) Vertreter: Hilti Aktiengesellschaft Corporate Intellectual Property
(86) Internationale Anmeldenummer: PCT/EP2012/076731
(87) Internationale Veröffentlichungsnummer: WO 2013/093041

(56) Entgegenhaltungen:
- EP-A2- 0 378 964
- DE-A1- 2 130 728
- FR-A5- 2 097 340
- US-A- 1 813 375
- US-A- 2 326 908
- US-A- 3 878 906
- US-A1- 2007 036 620

## Beschreibung

### Technisches Gebiet

Die vorliegende Erfindung betrifft eine Bohrkrone mit einem austauschbaren Schneidabschnitt gemäß dem Oberbegriff des Anspruchs 1.

### Stand der Technik

Bohrkronen bestehen aus einem Schneidabschnitt mit einem oder mehreren Schneidsegmenten, einem Bohrschaftabschnitt und einem Aufnahmeabschnitt mit Einsteckende, über das die Bohrkrone in der Werkzeugaufnahme einer Bohrmaschine befestigt wird. Die Bohrkrone wird im Bohrbetrieb von der Bohrmaschine um eine Bohrachse gedreht und erzeugt in einem zu bearbeitenden Werkstück ein Bohrloch. Im Bohrbetrieb ist der Aufnahmeabschnitt in der Werkzeugaufnahme der Bohrmaschine befestigt und der Schneidabschnitt ist dem zu bearbeitenden Werkstück zugewandt. Der Bohrschaftabschnitt ist zwischen dem Schneidabschnitt und dem Aufnahmeabschnitt angeordnet und mit beiden Bohrkronenabschnitten unmittelbar verbunden. Unter dem Begriff "Bohrkronenabschnitt" werden die einzelnen Abschnitte der Bohrkrone, die als Schneidabschnitt, Bohrschaftabschnitt oder Aufnahmeabschnitt ausgebildet sind, zusammengefasst.

Aus EP 0 428 476 A1 sind Bohrkronen mit einem Bohrschaftabschnitt und einem austauschbaren Schneidabschnitt bekannt. Der Bohrschaftabschnitt und der Schneidabschnitt der Bohrkrone sind über eine kombinierte Steck- und Lötverbindung miteinander verbunden. Als "kombinierte Steck- und Lötverbindung" werden Verbindungen von zwei Verbindungselementen bezeichnet, die zunächst eine in mindestens einer Richtung formschlüssige Steckverbindung bilden; anschließend werden die gesteckten Verbindungselemente miteinander verlötet. Der Schneidabschnitt weist ein äußeres Verbindungselement und der Bohrschaftabschnitt ein inneres Verbindungselement auf, wobei das innere und das äußere Verbindungselement ringförmig mit einem geschlossenen Querschnitt ausgebildet sind. Die Verbindungselemente werden ineinander gesteckt und miteinander verlötet. Das innere Verbindungselement ist um 2 bis 10 % länger als das äußere Verbindungselement ausgebildet und liegt mit einer Stirnfläche an einer Anlagefläche des äußeren Verbindungselementes an. Zwischen den ineinander gesteckten Verbindungselementen besteht ein Spalt, der mit einem Lot gefüllt wird. Durch Erwärmen der Verbindungselemente schmilzt das Lot und es bildet sich eine Lötverbindung zwischen den gesteckten Verbindungselementen.

US 2010/200304 A1 offenbart eine weitere bekannte Bohrkrone bestehend aus einem austauschbaren Schneidabschnitt, einem Bohrschaftabschnitt und einem Aufnahmeabschnitt, wobei der Schneidabschnitt und der Bohrschaftabschnitt über eine kombinierte Steck- und Lötverbindung miteinander verbunden sind. Der Schneidabschnitt umfasst einen offenen Ringabschnitt und mehrere Schneidsegmente, die fest mit dem Ringabschnitt verbunden sind. Durch den offenen Ringabschnitt mit einem schmalen Spalt zwischen den Enden des Ringabschnittes werden Maßabweichungen des Bohrschaftabschnittes ausgeglichen. Der Schneidabschnitt umfasst ein äußeres Verbindungselement und der Bohrschaftabschnitt ein inneres Verbindungselement, die ineinander gesteckt und anschließend miteinander verlötet werden. Das innere Verbindungselement des Bohrschaftabschnittes ist ringförmig ausgebildet und weist einen geschlossenen Querschnitt auf, das äußere Verbindungselement des Schneidabschnittes ist ringförmig mit einem offenen Querschnitt ausgebildet. Der Ringabschnitt weist entlang seines Umfangs mehrere durchgehende Bohrungen auf, die zumindest teilweise im äußeren Verbindungselement angeordnet sind. Die Bohrungen unterstützen die Verteilung des Lotes durch Kapillarwirkung in den Zwischenraum zwischen dem inneren und äußeren Verbindungselement.

Um bei den bekannten Bohrkronen mit kombinierter Steck- und Lötverbindung einen Schneidabschnitt auszutauschen, wird die Lötverbindung zwischen dem Bohrschaftabschnitt und dem Schneidabschnitt zerstört, ein neuer Schneidabschnitt wird auf den Bohrschaftabschnitt aufgesteckt und anschließend werden der Bohrschaftabschnitt und der neue Schneidabschnitt verlötet. Bohrkronen mit kombinierter Steck- und Lötverbindung weisen den Nachteil auf, dass zum Zerstören der Lötverbindung zwischen dem abgenutzten Schneidabschnitt und dem Bohrschaftabschnitt und zum Erstellen einer neuen Lötverbindung zwischen dem neuen Schneidabschnitt und dem Bohrschaftabschnitt eine Wärmequelle und ein Lötgerät erforderlich sind. Daher eignen sich die bekannten Bohrkronen mit kombinierter Steck- und Lötverbindung nicht für einen schnellen Austausch des Schneidabschnittes auf der Baustelle. Der Austausch des Schneidabschnittes ist nur mit einem passenden Werkzeug in Form einer Wärmequelle und einer Lötquelle möglich.

Bei Schneidsegmenten, die am Schneidabschnitt verlötet sind, weisen kombinierte Steck- und Lötverbindungen zwischen dem Bohrschaftabschnitt und dem Schneidabschnitt einen weiteren Nachteil auf. Durch das Erwärmen der Verbindungselemente kann die Lötverbindung der Schneidsegmente am Schneidabschnitt gelöst werden. Um sicherzustellen, dass die Wärmeeinflusszone die Schneidsegmente nicht erfasst, muss der Schneidabschnitt eine gewisse Höhe aufweisen. Andererseits sollte die Höhe des Schneidabschnittes möglichst gering sein, um Kosten zu reduzieren. Wenn die Schneidsegmente abgenutzt sind, wird der Schneidabschnitt vom Bohrschaftabschnitt entfernt und entsorgt. Je geringer die Höhe des Ringabschnittes ist, umso geringer sind die Materialkosten für die Ringabschnitte.

US 2,326,908 A offenbart eine Bohrkrone, die um eine Bohrachse drehbar ist und einen Bohrschaftabschnitt und einen Schneidabschnitt aufweist. Der Bohrschaftabschnitt weist ein erstes Steckverbindungselement auf und der Schneidabschnitt ein zweites Steckverbindungselement, das mit dem ersten Steckverbindungselement eine Steckverbindung bildet. Der Schneidabschnitt weist mehrere Teilschneidabschnitte auf, die jeweils einen Teilringabschnitt und mindestens ein Schneidsegment aufweisen. Die Schneidsegmente weisen Aussparungen auf, deren Geometrie komplementär zu Vorsprüngen am Bohrschaftabschnitt ausgebildet ist. Die Schneidsegmente bilden mit den Vorsprüngen Steckverbindungen in einer Steckrichtung parallel zur Bohrachse und sind über Stiftverbindungen mit den Vorsprüngen verbindbar. Die Stiftverbindungen umfassen eine Aufnahmebohrung und ein Stiftelement. Nachteilig ist, dass die Aufnahmebohrungen parallel zur Bohrachse angeordnet sind und die Schneidsegmente parallel zur Bohrachse durchdringen.

US 1 ,813,375 A offenbart eine Bohrkrone nach dem Oberbegriff des Anspruchs 1 nit einer lösbaren Steck-Stift-Verbindung zwischen einem Schneidabschnitt und einem Bohrschaftabschnitt. Der Bohrschaftabschnitt umfasst einen zylinderförmigen Bohrschaft und ein erstes Steckverbindungselement. Der Schneidabschnitt umfasst mehrere Teilschneidabschnitte, die jeweils einen Teilringabschnitt, mehrere Schneidsegmente und einen Teilsteckabschnitt aufweisen. Die Teilsteckabschnitte bilden ein zweites Steckverbindungselement, das mit dem ersten Steckverbindungselement des Bohrschaftabschnittes in einer Steckrichtung parallel zur Bohrrichtung eine Steckverbindung mit einem äusseren und inneren Steckverbindungselement bildet. Die Teilsteckabschnitte sind jeweils über eine Stiftverbindung mit dem ersten Steckverbindungselement verbindbar. Die Stiftverbindungen sind als Schraubverbindungen mit einem Schraubelement, einer Mutter und einer Aufnahmebohrung ausgebildet. Nachteilig ist, dass das Schraubelement an der Innenseite und der Außenseite des Bohrschaftabschnittes vorsteht.

FR 2 097 340 A5 offenbart eine weitere Bohrkrone mit einer lösbaren Steck-Stift-Verbindung zwischen einem Schneidabschnitt und einem Bohrschaftabschnitt. Der Bohrschaftabschnitt weist ein erstes Steckverbindungselement auf und der Schneidabschnitt ein zweites Steckverbindungselement, das mit dem ersten Steckverbindungselement eine Steckverbindung bildet. Der Schneidabschnitt weist mehrere Teilschneidabschnitte auf, die jeweils einen Teilringabschnitt und mindestens ein Schneidsegment aufweisen. Die Teilringabschnitte bilden mit dem ersten Steckverbindungselement eine Steckverbindung und sind über eine lösbare Stiftverbindung, die eine Aufnahmebohrung und ein in die Aufnahmebohrung einsetzbares lose ausgebildetes Stiftelement aufweist, mit dem ersten Steckverbindungselement verbindbar. Die Aufnahmebohrung durchdringt eines der Steckverbindungselemente vollständig und das andere der Steckverbindungselemente zumindest teilweise.

### Darstellung der Erfindung

Die Aufgabe der vorliegenden Erfindung besteht demgegenüber darin, eine Bohrkrone mit einem austauschbaren Schneidabschnitt dahingehend weiterzuentwickeln, dass der apparative Aufwand für den Anwender beim Austausch des Schneidabschnittes reduziert ist. Außerdem soll beim Austausch des Schneidabschnittes das Risiko reduziert werden, dass die Verbindung der Schneidsegmente zum Ringabschnitt beeinträchtigt wird.

Diese Aufgabe wird bei der eingangs genannten Bohrkrone erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass die Stiftverbindungen als magnetische Stiftverbindungen ausgebildet sind, wobei das Stiftelement oder eines der Verbindungselemente als Dauermagnet ausgebildet ist.

Magnetische Stiftverbindungen haben den Vorteil, dass die Stiftelemente wiederverwendbar sind und die Stiftelemente eine bekannte Haltekraft erzeugen. Bei einer magnetischen Stiftverbindung kann der Anwender einen Schneidabschnitt einfach und schnell gegen einen neuen Schneidabschnitt austauschen. Zum Entfernen des alten Schneidabschnittes werden die Stiftelemente aus den Aufnahmebohrungen entfernt und die Steckverbindung zwischen den Bohrkronenabschnitten gelöst. Die Bohrkronenabschnitte werden ineinander gesteckt und die als Dauermagnet ausgebildeten Stiftelemente werden in die Durchgangsbohrungen des äußeren Verbindungselementes eingesetzt. Anschließend wird das äußere Verbindungselement um das innere Verbindungselement gedreht, bis die Stiftelemente in die Aufnahmebohrungen des inneren Verbindungselementes einrasten. Das Einrasten der Stiftelemente ist aufgrund der Magnetkräfte für den Anwender zu hören. Die magnetischen Stiftverbindungen haben den Vorteil, dass die Bohrungen im inneren und äußeren Verbindungselement beim Austausch eines Bohrkronenabschnittes vom Anwender nicht exakt zueinander ausgerichtet werden müssen, sondern die exakte Ausrichtung erfolgt durch das Drehen des Bohrkronenabschnittes und das Einrasten der Stiftelemente in die Aufnahmebohrungen.

Der Schneidabschnitt und der Bohrschaftabschnitt der Bohrkrone sind über eine Steckverbindung mit einem äusseren und inneren Steckverbindungselement und über eine Stiftverbindung verbindbar. Jede Stiftverbindung weist mindestens eine Aufnahmebohrung und mindestens ein Stiftelement auf, wobei das Stiftelement in die Aufnahmebohrung einsetzbar ist.

Die Geometrie der Aufnahmebohrungen und der Stiftelemente sind aufeinander abgestimmt; die Stiftelemente sich beispielsweise zylinderförmig mit rundem oder elliptischem Querschnitt oder konisch zulaufend ausgebildet. Durch die Stiftverbindungen zwischen den Steckverbindungselementen sind die Teilschneidabschnitte und der Bohrschaftabschnitt gegen ein Verdrehen und ein Verschieben relativ zueinander gesichert.

Als Steckverbindung wird eine Verbindung bezeichnet, bei der zwei Steckverbindungselemente, die als erstes und zweites Steckverbindungselement bezeichnet werden, entlang einer Steckrichtung geführt werden und in mindestens einer Richtung eine formschlüssige Verbindung bilden. Als Stiftverbindung wird eine Verbindung bezeichnet, bei der zwei Verbindungspartner über ein Stiftelement verbunden werden.

Das erste und zweite Steckverbindungselement bilden eine Steckverbindung mit einem äu-ßeren Steckverbindungselement und einem inneren Steckverbindungselement. Eine Steckverbindung mit einem inneren und äußeren Steckverbindungselement sichert die Teilschneidabschnitte gegen eine Drehung um die Bohrachse und lässt sich vom Bediener leicht öffnen und schließen. Außerdem sind die Bohrkronenabschnitte, die über die Verbindungselemente verbunden sind, genau zueinander ausgerichtet.

Der Außendurchmesser des äußeren Steckverbindungselementes ist kleiner oder gleich dem Außendurchmesser eines Schneidkreises, den die Schneidsegmente bilden und der Innendurchmesser des inneren Steckverbindungselementes ist grösser oder gleich dem Innendurchmesser des Schneidkreises. Der Innen- und Außendurchmesser des Schneidkreises bestimmt den Durchmesser des Bohrloches im Werkstück und den Durchmesser des Bohrkerns. Um die Funktionsfähigkeit der Bohrkrone beim Kernbohren im Werkstück sicherzustellen, darf die kombinierte Steck- und Stiftverbindung der Bohrkrone den Innendurchmesser des Schneidkreises nicht unterschreiten und den Außendurchmesser des Schneidkreises nicht überschreiten.

Bevorzugt ist in einem oder mehreren Teilringabschnitten und/oder im ersten Steckverbindungselement eine Vertiefung vorgesehen, die mit einem Korrosionsschutzmittel befüllbar ist. Durch das Korrosionsschutzmittel in der Vertiefung wird die Steckverbindung gleitfähig gehalten und die Funktionsfähigkeit verbessert. Das Korrosionsschutzmittel ist besonders wichtig, wenn beim Kernbohren eine Kühl- und Spülflüssigkeit verwendet wird, die zur Korrosion zwischen den Steckverbindungselementen führen kann und damit die Lösbarkeit der Steckverbindung einschränkt.

Die mindestens eine Aufnahmebohrung ist besonders bevorzugt gleich tief oder tiefer als das mindestens eine Stiftelement ausgebildet. Durch diese Ausbildung der Aufnahmebohrung ist sichergestellt, dass die Stiftelemente gegenüber der Innenseite oder der Außenseite des Bohrschaftabschnittes nicht vorstehen.

In einer ersten Variante durchdringt die Aufnahmebohrung das andere Steckverbindungselement nicht vollständig. Dadurch, dass die Aufnahmebohrung das Steckverbindungselement nur teilweise und nicht vollständig durchdringt, wird ein Herausfallen des Stiftelementes verhindert. Außerdem kann der Boden der Aufnahmebohrung für eine magnetische Stiftverbindung als Gegenfläche zum Stiftelement dienen.

Besonders bevorzugt weist das andere Steckverbindungselement eine Öffnung auf, die die Aufnahmebohrung mit der Innenseite oder der Außenseite der Bohrkrone verbindet, wobei die Öffnung kleiner als die Aufnahmebohrung ausgebildet ist. Über die Öffnung ist das Stiftelement von der Innen- oder Außenseite der Bohrkrone zugänglich und kann mit einem geeigneten Werkzeug aus der Aufnahmebohrung entfernt werden, so dass die Stiftverbindung vom Bediener leicht gelöst werden kann.

In einer zweiten Variante durchdringt die Aufnahmebohrung das andere Steckverbindungselement vollständig. Durchgängige Aufnahmebohrungen haben den Vorteil, dass die Aufnahmebohrungen von der Innen- oder Außenseite zugänglich sind und die Stiftverbindungen vom Bediener leicht gelöst werden können. Bevorzugt weist die Aufnahmebohrung eine konisch zulaufende Form auf. Durch die konische Form der Aufnahmebohrungen und der Stiftelemente besteht keine Gefahr, dass die Stiftelemente zur Innen- oder Außenseite durchrutschen.

Bevorzugt sind die Stiftelemente in den Aufnahmebohrungen klemmbar. Dabei ist die Aufnahmebohrung als Querschlitz mit unterschiedlichen Breiten ausgebildet und das Stiftelement wird in den Querschlitz eingeführt. Durch eine Drehbewegung um die Bohrachse wird das Stiftelement im Querschlitz gedreht, bis das Stiftelement im Querschlitz geklemmt ist.

Die magnetischen Stiftelemente lassen sich bevorzugt mit den klemmbaren Stiftelementen kombinieren. Die Kombination eignet sich für Anwendungen der Bohrkrone, bei denen die Magnetkraft beispielsweise durch hohe Temperaturen stark reduziert wird. In diesem Fall fixiert das geklemmte Stiftelement den Schneidabschnitt am Bohrschaftabschnitt. Die magnetische Ausbildung des Stiftelementes hat den Vorteil, dass das Stiftelement beim Einführen des Stiftelementes in die Aufnahmebohrung fixiert ist.

In einer bevorzugten Ausführung sind zwischen den Schneidsegmenten und dem Bohrschaftabschnitt Führungsabschnitte angeordnet, wobei die Führungsabschnitte zumindest teilweise bündig an der Außenseite und/oder der Innenseite an die Schneidsegmente anschließen. Durch den bündigen Anschluss der Führungsabschnitte an die Schneidsegmente bilden die Führungsabschnitte beim Bohren mit der Bohrkrone eine Führung für die Schneidsegmente und stabilisieren die Schneidsegmente. Dabei kann die Führung über die Führungsabschnitte an der Außenseite der Bohrkrone über den das Bohrloch umgebenden Untergrund oder an der Innenseite der Bohrkrone über den Bohrkern erfolgen.

Besonders bevorzugt schließen die Führungsabschnitte zumindest teilweise bündig an der Außenseite an die Schneidsegmente an und sind zumindest teilweise als äußeres Steckverbindungselement der Steckverbindung ausgebildet. Alternativ oder zusätzlich schließen die Führungsabschnitte zumindest teilweise bündig an der Innenseite an die Schneidsegmente an und sind zumindest teilweise als inneres Steckverbindungselement der Steckverbindung ausgebildet.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt.

Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Bohrkrone bestehend aus einem Bohrschaftabschnitt und einem austauschbaren Schneidabschnitt mit vier Teilschneidabschnitten, die über kombinierte Steck- und Stiftverbindungen mit dem Bohrschaftabschnitt verbunden sind;
- FIG. 2: den Bohrschaftabschnitt der in FIG. 1 dargestellten Bohrkrone, wobei der Bohrschaftabschnitt über kombinierte Steck- und Stiftverbindungen mit zwei Teilschneidabschnitten verbunden ist;
- FIGN. 3A-C: den Bohrschaftabschnitt und den ersten Teilschneidabschnitt der in FIG. 1 dargestellten Bohrkrone in einem Querschnitt senkrecht zur Bohrachse entlang einer Schnittebene A-A in FIG. 2 in einem nicht-verbundenen Zustand (FIG. 3A), in einem gesteckten Zustand mit einer Steckverbindung (FIG. 3B) und in einem verbundenen Zustand mit der kombinierten Steck- und Stiftverbindung (FIG. 3C); und
- FIGN. 4A, B: den Bohrschaftabschnitt und den ersten Teilschneidabschnitt der in FIG. 1 dargestellten Bohrkrone in einem Längsschnitt parallel zur Bohrachse der Bohrkrone entlang der Schnittebene B-B in FIG. 2 in einem nicht-verbundenen Zustand (FIG. 4A) und in einem verbundenen Zustand (FIG. 4B).

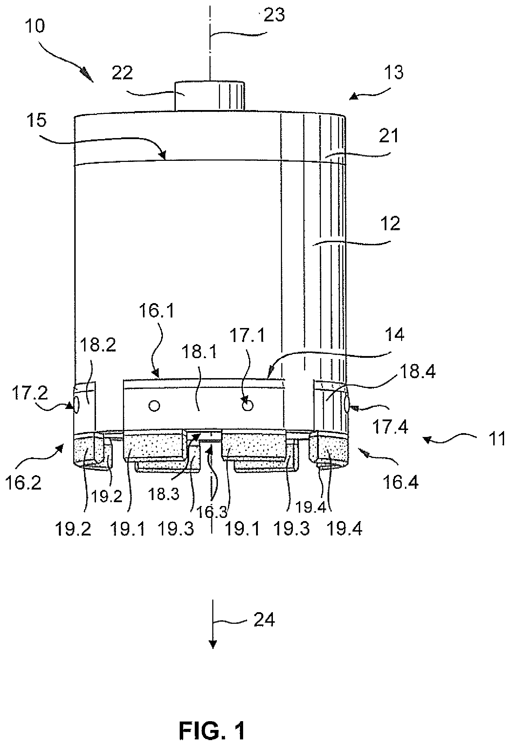

**FIG. 1** zeigt eine erfindungsgemäße Bohrkrone **10** bestehend aus einem austauschbaren Schneidabschnitt **11**, einem Bohrschaftabschnitt **12** und einem Aufnahmeabschnitt **13** in einer dreidimensionalen Darstellung. Der Schneidabschnitt 11 ist über eine erste Verbindung **14** mit dem Bohrschaftabschnitt 12 und der Bohrschaftabschnitt 12 über eine zweite Verbindung **15** mit dem Aufnahmeabschnitt 13 verbunden.

Die erste Verbindung 14 ist eine lösbar ausgebildete, kombinierte Steck- und Stiftverbindung und die zweite Verbindung 15 ist in dem in FIG. 1 gezeigten Ausführungsbeispiel als nichtlösbare Verbindung in Form einer Schweißverbindung ausgebildet. Als "kombinierte Steck- und Stiftverbindung" werden Verbindungen von zwei Verbindungselementen bezeichnet, die zunächst eine in mindestens einer Richtung formschlüssige Steckverbindung bilden; anschließend werden die gesteckten Verbindungselemente über ein Stiftelement verbunden. Eine Verbindung wird als lösbar bezeichnet, wenn die Verbindung zerstörungsfrei gelöst werden kann. Eine Verbindung wird als nicht-lösbar bezeichnet, wenn die Verbindung nur durch Zerstörung der Verbindungsmittel gelöst werden kann, wie beispielsweise eine Lötverbindung, eine Schweißverbindung, eine Nietverbindung oder eine Klebeverbindung.

Der Schneidabschnitt 11 umfasst vier Teilschneidabschnitte **16.1, 16.2, 16.3, 16.4,** die mit dem Bohrschaftabschnitt 12 über kombinierte Steck- und Stiftverbindungen **17.1, 17.2, 17.3, 17.4** verbunden sind. Die vier Teilschneidabschnitte 16.1-16.4 bestehen jeweils aus einem Teilringabschnitt **18.1, 18.2, 18.3, 18.4** und zwei Schneidsegmenten **19.1, 19.2, 19.3, 19.4,** die mit den jeweiligen Teilringabschnitten 18.1-18.4 verbunden sind. Die Schneidsegmente 19.1-19.4 sind mit den Teilringabschnitten 18.1-18.4 verschweißt, verlötet, verschraubt oder in einer anderen geeigneten Befestigungsart an den Teilringabschnitten 18.1-18.4 befestigt. Der Aufnahmeabschnitt 13 umfasst einen Deckel **21** und ein Einsteckende **22**, über das die Bohrkrone 10 in der Werkzeugaufnahme einer Bohrmaschine befestigt wird. Im Bohrbetrieb wird die Bohrkrone 10 von der Bohrmaschine um eine Bohrachse **23** gedreht und in einer Bohrrichtung **24** parallel zur Bohrachse 23 in das zu bearbeitende Werkstück bewegt. Die Vorschubbewegung erfolgt bei einer handgeführten Bohrmaschine manuell durch den Bediener und bei einer ständergeführten Bohrmaschine durch eine Vorschubeinrichtung, wobei die Vorschubeinrichtung als Handrad oder als motorischer Antrieb ausgebildet sein kann.

Die Teilschneidabschnitte 16.1-16.4 weisen in dem in FIG. 1 gezeigten Ausführungsbeispiel jeweils zwei Schneidsegmente 19.1-19.4 auf. Alternativ können die Teilschneidabschnitte 16.1-16.4 ein Schneidsegment oder mehr als zwei Schneidsegmente aufweisen. Bei der Entscheidung, wie viele Schneidsegmente mit dem Teilringabschnitt 18.1-18.4 verbunden werden, sind verschiedene Randbedingungen zu berücksichtigen. Dazu gehören vor allem die herstellbare Maximallänge der Schneidsegmente, die vom eingesetzten Herstellungsverfahren abhängig ist, und der Abtransport einer Kühl- und Spülflüssigkeit. Beim Kernbohren ist eine Kühl- und Spülflüssigkeit erforderlich, die als Kühlflüssigkeit die Schneidsegmente 19.1-19.4 kühlt und als Spülflüssigkeit Bohrklein abtransportiert. Saubere Kühl- und Spülflüssigkeit wird über einen Innenspalt zwischen dem Bohrkern und dem Bohrschaftabschnitt 12 zugeführt und mit Bohrklein versetzte, verbrauchte Kühl- und Spülflüssigkeit wird über einen Außenspalt zwischen dem Bohrschaftabschnitt 12 und dem Bohrloch abgeführt. Über Spalte, die zwischen den einzelnen Schneidsegmenten 19.1-19.4 eines Teilringabschnittes 18.1-18.4 bzw. zwischen den Teilringabschnitten 18.1-18.4 vorgesehen sind, wird der Abtransport der Kühl- und Spülflüssigkeit unterstützt.

Die Bohrkrone 10 weist in einer Ebene senkrecht zur Bohrachse 23 einen kreisförmigen Querschnitt auf. Alternativ können erfindungsgemäße Bohrkronen andere geeignete Querschnitte, wie beispielsweise einen mehreckigen Querschnitt aufweisen. Bei einem mehreckigen Querschnitt der Bohrkrone 10 ist es sinnvoll, an jeder Seite des Mehreckes einen Teilschneidabschnitt anzubringen.

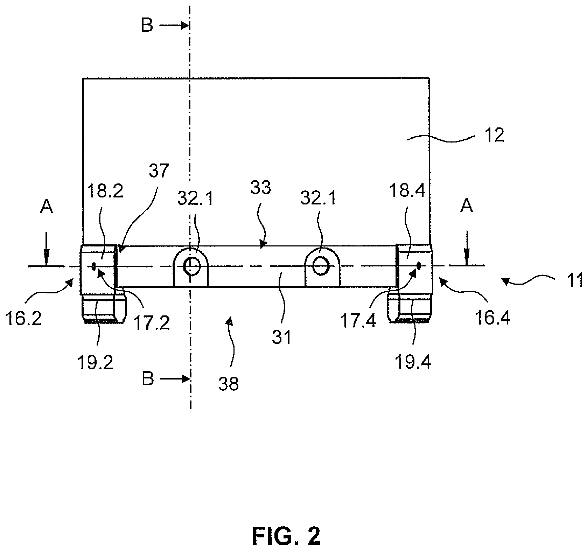

**FIG. 2** zeigt den Bohrschaftabschnitt 12 der in FIG. 1 dargestellten Bohrkrone 10 mit zwei Teilschneidabschnitten, die über kombinierte Steck- und Stiftverbindungen mit dem Bohrschaftabschnitt 12 verbunden sind. Dabei sind der zweite und vierte Teilschneidabschnitt 16.2, 16.4 über die kombinierten Steck- und Stiftverbindungen 17.2, 17.4 am Bohrschaftabschnitt 12 befestigt, wohingegen der erste und dritte Teilschneidabschnitt 16.1, 16.3 nicht mit dem Bohrschaftabschnitt 12 verbunden sind.

Der Bohrschaftabschnitt 12 weist einen Steckverbindungsabschnitt **31** auf, der an der dem Schneidabschnitt 11 zugewandten Seite des Bohrschaftabschnittes 12 vorgesehen ist. Im Steckverbindungsabschnitt 31 sind für jeden Teilschneidabschnitt 16.1-16.4 zwei Nuten **32.1-32.4** vorgesehen, die mit entsprechenden Zapfen an den Teilschneidabschnitten 16.1-16.4 jeweils eine Steckverbindung bilden. Der Steckverbindungsabschnitt 31 und die Nuten 32.1-32.4 werden gemeinsam als erstes Steckverbindungselement **33** des Bohrschaftabschnittes 12 bezeichnet.

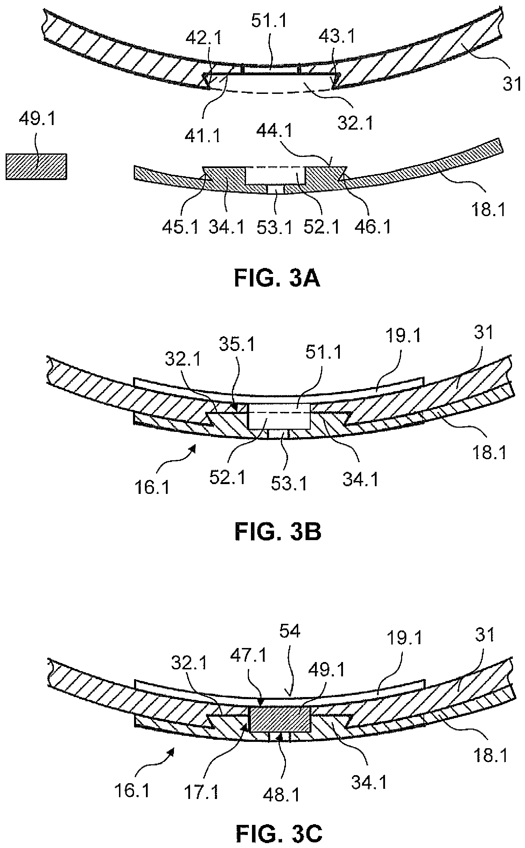

FIGN. 3A-C zeigen den Steckverbindungsabschnitt 31 mit der Nut 32.1 und den ersten Teilschneidabschnitt 16.1 mit einem Zapfen **34.1** in einem Querschnitt senkrecht zur Bohrachse 23 entlang einer Schnittebene A-A in FIG. 2 in einem nicht-verbundenen Zustand (FIG. 3A), in einem gesteckten Zustand mit einer Steckverbindung **35.1** zwischen der Nut 32.1 und dem Zapfen 34.1 (FIG. 3B) und in einem verbundenen Zustand mit der kombinierten Steck- und Stiftverbindung 17.1 (FIG. 3C).

Die in den FIGN. 3A-C dargestellte kombinierte Steck- und Stiftverbindung 17.1 des ersten Teilschneidabschnittes 16.1 zeigt nur eine Nut 32.1 und einen Zapfen 34.1. Die Ausführungen gelten analog für die zweite Nut 32.1 und den zweiten Zapfen 34.1 der kombinierten Steck- und Stiftverbindung 17.1 des ersten Teilschneidabschnittes 16.1 und für die kombinierten Steck- und Stiftverbindungen 17.2-17.4 der drei weiteren Teilschneidabschnitte 16.2-16.4. Jeder Teilringabschnitt 18.1-18.4 bildet mit seinen Zapfen 34.1.34.4 einen Teilsteckabschnitt **36.1-36.4.** Die vier Teilsteckabschnitte 36.1-36.4 werden gemeinsam als zweites Steckverbindungselement 37 des Schneidabschnittes 11 bezeichnet und das zweite Steckverbindungselement 37 bildet mit dem ersten Steckverbindungselement 33 des Bohrschaftabschnittes 12 eine Steckverbindung 38 (siehe FIG. 2).

Die Nut 32.1 und der Zapfen 34.1 sind senkrecht zur Bohrachse 23 trapezförmig ausgebildet. Die trapezförmige Nut 32.1 ist gleichschenklig ausgebildet und weist eine innere Grundfläche **41.1** und zwei innere Schenkelflächen **42.1, 43.1** auf. Der trapezförmige Zapfen 34.1 ist ebenfalls gleichschenklig ausgebildet und weist eine äußere Grundfläche **44.1** und zwei äu-ßere Schenkelflächen **45.1, 46.1** auf. Der Steckverbindungsabschnitt 31 ist monolithisch mit dem Bohrschaftabschnitt 12 ausgebildet und der Zapfen 34.1 ist monolithisch mit dem Teilringabschnitt 18.1 ausgebildet. Alternativ zur monolithischen Ausbildung können der Zapfen 34.1 und/oder der Steckverbindungsabschnitt 31 als separate Teile ausgebildet und anschließend mit dem Teilringabschnitt 18.1 und/oder mit dem Bohrschaftabschnitt 12 verbunden werden.

Im gesteckten Zustand (FIG. 3B) bilden die Nut 32.1 und der Zapfen 34.1 die als formschlüssige Schwalbenschwanzverbindung ausgebildete Steckverbindung 35.1 und sichern den Teilschneidabschnitt 16.1 gegen eine Drehung um die Bohrachse 23. Die Passung von Nut 32.1 und Zapfen 34.1 ist so ausgebildet, dass eine Drehmomentübertragung vom Bohrschaftabschnitt 12 auf den Schneidabschnitt 11 erfolgen kann und der Zapfen 34.1 zum Austausch des Teilschneidabschnittes 16.1 entgegen der Steckrichtung bewegt werden kann.

Um eine Translation des Teilschneidabschnittes 16.1 in Bohrrichtung 24 zu verhindern, sind die Nut 32.1 und der Zapfen 34.1 zusätzlich über eine Stiftverbindung **47.1** miteinander verbunden (FIG. 3C). Die Stiftverbindung 47.1 umfasst eine Aufnahmebohrung **48.1** und ein Stiftelement **49.1,** das in die Aufnahmebohrung 48.1 gesteckt wird. Die Aufnahmebohrung 48.1 besteht aus einer Durchgangsbohrung **51.1**, die den Steckverbindungsabschnitt 31 vollständig durchdringt, und einer Sackbohrung **52.1**, die den Teilringabschnitt 18.1 teilweise durchdringt (FIGN. 3A, B). Die Aufnahmebohrung 48.1 ist im Teilringabschnitt 18.1 als Sackbohrung 52.1 ausgebildet, um ein Herausfallen des Stiftelementes 49.1 aus der Aufnahmebohrung 48.1 zu verhindern. Die Durchmesser der Stiftelemente 49.1-49.4 und der zugehörigen Aufnahmebohrungen 48.1-48.4 sind aufeinander abgestimmt. Die Aufnahmebohrungen 48.1-48.4 sind gleich tief oder tiefer als die Stiftelemente 49.1-49.4 ausgebildet. Dadurch ist sichergestellt, dass die Stiftelemente 49.1-49.4 gegenüber der Innen- oder Außenseite nicht vorstehen. Die Sackbohrung 52.1 ist über eine Öffnung **53.1** mit einer Außenseite **54** der Bohrkrone 10 verbunden. Über die Öffnung 53.1 ist das Stiftelement 49.1 von der Außenseite 54 zugänglich und kann beispielsweise mit einem geeigneten Werkzeug aus der Aufnahmebohrung 48.1 gedrückt werden, so dass die Stiftverbindung 47.1 leicht gelöst werden kann.

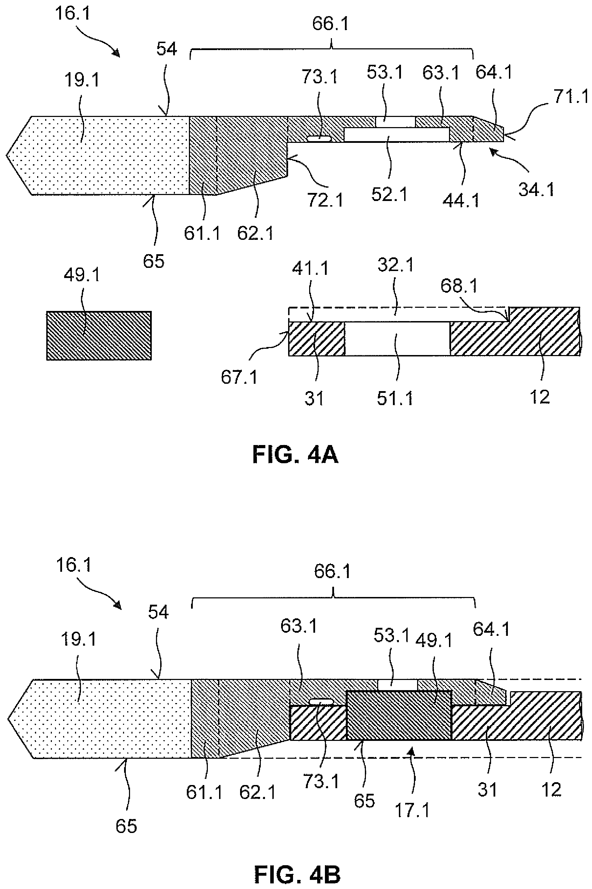

**FIGN. 4A****, B** zeigen den Steckverbindungsabschnitt 31 mit der Nut 32.1 und den ersten Teilschneidabschnitt 16.1 mit dem Zapfen 34.1 in einem Längsschnitt parallel zur Bohrachse 23 entlang einer Schnittebene B-B in FIG. 2 in einem nicht-verbundenen Zustand (FIG. 4A) und in einem verbundenen Zustand mit der kombinierten Steck- und Stiftverbindung 17.1 (FIG. 4B).

Der Teilringabschnitt 18.1 besteht in Bohrrichtung 24 aus vier Abschnitten, einem ersten Ringabschnitt **61.1** mit einem konstanten Innendurchmesser, einem zweiten Ringabschnitt **62.1** mit einem Innendurchmesser, der in Richtung der Schneidsegmente 19.1 abnimmt, einem Verbindungsabschnitt **63.1** und einem Übergangsabschnitt **64.1**. Die Schneidsegmente 19.1 sind am ersten Ringabschnitt 61.1 befestigt. In dem gezeigten Ausführungsbeispiel schließt der erste Ringabschnitt 61.1 an der Außenseite 54 und an einer Innenseite **65** der Bohrkrone 10 bündig an die Schneidsegmente 19.1 an. Der zweite Ringabschnitt 62.1 dient dazu, das Entfernen des Bohrkerns zu unterstützen und wird auch als Kernentfernungsabschnitt bezeichnet. Ein abgeschrägter Übergangsabschnitt 64.1 hat den Vorteil, dass eine Bohrkrone 10, die sich im Bohrloch verklemmt hat, aufgrund des geringeren Widerstandes leichter aus dem Bohrloch entfernt werden kann.

Der erste Ringabschnitt 61.1, der zweite Ringabschnitt 62.1 und der Verbindungsabschnitt 63.1 weisen einen konstanten Außendurchmesser auf, der dem Außendurchmesser der Schneidsegmente 19.1 entspricht, und bilden beim Bohren mit der Bohrkrone 10 eine Führung für die Schneidsegmente 19.1. Die Abschnitte 61.1-63.1 an der Außenseite 54 werden gemeinsam als Führungsabschnitt **66.1** bezeichnet. Der Führungsabschnitt 66.1 kann alternativ nur aus dem ersten Ringabschnitt 61.1 oder aus dem ersten und zweiten Ringabschnitt 61.1, 62.1 gebildet sein. Der erste Ringabschnitt 61.1 kann auch entfallen bzw. die Höhe des ersten Ringabschnittes 61.1 wird infinitesimal klein. In diesem Fall weist der zweite Ringabschnitt 62.1 an der Verbindung mit den Schneidsegmenten 19.1 einen Innendurchmesser auf, der dem Innendurchmesser der Schneidsegmente 19.1 entspricht, und die Außenfläche des zweiten Ringabschnittes 62.1 bildet den Führungsabschnitt 66.1.

Der Führungsabschnitt 66.1 wird bei der Bearbeitung mit der Bohrkrone 10 vom zu bohrenden Untergrund durch Reibung abgenutzt. Die Anordnung des Führungsabschnittes 66.1 am austauschbaren Teilschneidabschnitt 16.1 hat den Vorteil, dass der Führungsabschnitt 66.1 regelmäßig ersetzt wird und gute Führungseigenschaften für die Schneidsegmente 19.1 sichergestellt werden. Dabei wird die Höhe des Führungsabschnittes 66.1 so gewählt, dass einerseits die Schneidsegmente 19.1 beim Bohren geführt werden und andererseits die Kühl- und Spülflüssigkeit im Bohrloch transportiert werden kann.

Anstatt einer Bohrkrone 10 mit Führungsabschnitten 66.1-66.4 kann auch ein herkömmlicher Ringabschnitt vorgesehen sein, bei dem die Schneidsegmente 19.1-19.4 an der Innen- und Außenseite den gleichen Überstand aufweisen. Die gezeigte Ausführungsform der Bohrkrone 10 mit den Führungsabschnitten 66.1-66.4 hat den Vorteil, dass für die Ausbildung der Nuten 32.1-32.4 und Zapfen 34.1-34.4 mehr Material verfügbar ist, was die Herstellung der Nuten 32.1-32.4 und Zapfen 34.1-34.4 (Steckverbindungen 35.1-35.4) vereinfacht.

Der erste Teilschneidabschnitt 16.1 wird mit dem Zapfen 34.1 in die Nut 32.1 des Bohrschaftabschnittes 12 gesteckt. Die Nut 32.1 umfasst neben der inneren Grundfläche 41.1 und den inneren Schenkelflächen 42.1, 43.1 eine Stirnfläche **67.1** und eine Anlagefläche **68.1**. Der Zapfen 34.1 umfasst neben der äußeren Grundfläche 44.1 und den äußeren Schenkelflächen 45.1, 46.1 eine Stirnfläche **71.1** und eine Anlagefläche **72.1.** Die Nut 32.1 ist länger als der Zapfen 34.1 ausgebildet. Durch die Längendifferenz zwischen der Nut 32.1 und dem Zapfen 34.1 ist sichergestellt, dass die Stirnfläche 67.1 der Nut 32.1 an der Anlagefläche 72.1 des Zapfens 34.1 anliegt und zwischen der Stirnfläche 71.1 des Zapfens 34.1 und der Anlagefläche 68.1 der Nut 32.1 ein Spalt besteht.

Um die Funktionsfähigkeit der Steckverbindung 35.1 zu erhalten, weist der erste Teilschneidabschnitt 16.1 eine Vertiefung **73.1** auf, die vor dem Zusammenbau der Bohrkrone 10 mit einem Korrosionsschutzmittel gefüllt wird. Alternativ oder zusätzlich kann im Steckverbindungsabschnitt 31 des Bohrschaftabschnittes 12 eine Vertiefung vorgesehen sein, die ein Korrosionsschutzmittel aufnimmt.

Die erste Verbindung 14 zwischen dem Schneidabschnitt 11 und dem Bohrschaftabschnitt 12 muss den Schneidabschnitt 11 und den Bohrschaftabschnitt 12 in sämtlichen Translations- und Rotationsrichtungen miteinander verbinden. Der austauschbare Schneidabschnitt 11 muss gegen Translationen in Bohrrichtung 24, entgegen der Bohrrichtung 24 und radial zur Bohrrichtung 24 sowie gegen Drehungen um die Bohrachse 23 gesichert werden. Die Steckverbindungen 35.1-35.4 sichern die Teilschneidabschnitte 16.1-16.4 gegen Translationen entgegen der Bohrrichtung 24 und radial zur Bohrrichtung 24. Die Stiftverbindungen 47.1-47.4 verhindert eine Drehung um die Bohrachse 23 und eine Translation in Bohrrichtung 24. Dabei gibt es für die Stiftverbindungen 47.1-47.4 die zusätzliche Anforderung, dass die Stiftelemente 49.1-49.4 im Bohrbetrieb sicher in den Aufnahmebohrungen 48.1-48.4 fixiert sind und sich nicht aus den Aufnahmebohrungen 48.1-48.4 lösen. Sollten sich die Stiftelemente 49.1-49.4 im Bohrbetrieb aus den Aufnahmebohrungen 48.1-48.4 lösen, sind die Teilschneidabschnitte 16.1-16.4 nicht gegen eine Translation in Bohrrichtung 24 und eine Drehung um die Bohrachse 23 gesichert.

Um die Gefahr zu reduzieren, dass sich die Stiftelemente 49.1-49.4 lösen und aus den Aufnahmebohrungen 48.1-48.4 herausfallen, ist eine zusätzliche Sicherungseinrichtung für die Stiftelemente 49.1-49.4 vorgesehen. Die Stiftelemente 49.1-49.4 sind als magnetische Stiftelemente ausgebildet. Nach der Erfindung sind die Stiftverbindungen 47.1-47.4 der Bohrkrone 10 magnetisch ausgebildet. Dabei sind die Stiftelemente 49.1-49.4 als Dauermagnet und der Steckverbindungsabschnitt 31 ferromagnetisch ausgebildet. Alternativ können der Steckverbindungsabschnitt 31 als Dauermagnet und die Stiftelemente 49.1-49.4 ferromagnetisch ausgebildet sein. Bei einer magnetischen Stiftverbindung bildet der Boden der Sackbohrung eine magnetische Gegenfläche zum Stiftelement. Die Zapfen 34.1-34.4 können aus einem ferromagnetischen Material ausgebildet sein.

Ein Teilschneidabschnitt 16.1-16.4, bei dem die Schneidsegmente 19.1-19.4 abgenutzt sind, kann vom Anwender einfach und schnell gegen einen neuen Teilschneidabschnitt 16.1-16.4 ausgetauscht werden. Zum Entfernen des abgenutzten Teilschneidabschnittes 16.1-16.4 werden die Stiftelemente 49.1-49.4 über die Öffnungen 53.1-53.4 aus den Aufnahmebohrungen 48.1-48.4 entfernt und der abgenutzte Teilschneidabschnitt 16.1-16.4 wird entgegen der Steckrichtung vom Bohrschaftabschnitt 12 entnommen. Der neue Teilschneidabschnitt 16.1-16.4 wird mit den Zapfen 34.1-34.4 in die Nuten 32.1-32.4 des Bohrschaftabschnittes 12 gesteckt, bis die Stirnfläche 67.1-67.4 des Steckverbindungsabschnittes 31 an der Anlagefläche 72.1-72.4 des neuen Teilschneidabschnittes 16.1-16.4 anliegt. Anschließend werden die Stiftelemente 49.1-49.4 über die Durchgangsbohrungen des Bohrschaftabschnittes 12 in die Aufnahmebohrungen 48.1-48.4 eingesetzt.

## Patentansprüche

1. Bohrkrone (10), die um eine Bohrachse (23) drehbar ist, aufweisend:
▪ einen Bohrschaftabschnitt (12) mit einem ersten Steckverbindungselement (33) und
▪ einen Schneidabschnitt (11) mit einem zweiten Steckverbindungselement (37), das mit dem ersten Steckverbindungselement (33) eine Steckverbindung (38) mit einem äußeren Steckverbindungselement (37) und einem inneren Steckverbindungselement (33) bildet, wobei der Schneidabschnitt (11) mehrere Teilschneidabschnitte (16.1-16.4), die jeweils einen Teilringabschnitt (18.1-18.4) und mindestens ein Schneidsegment (19.1-19.4) aufweisen, aufweist und jeder Teilringabschnitt (18.1-18.4) mit dem ersten Steckverbindungselement (33) eine Steckverbindung (35.1-35.4) bildet und über eine Stiftverbindung (47.1-47.4), die mindestens eine Aufnahmebohrung (48.1-48.4) und mindestens ein in die Aufnahmebohrung (48.1-48.4) einsetzbares lose ausgebildetes Stiftelement (49.1-49.4) aufweist, mit dem ersten Steckverbindungselement (33) verbindbar ist, wobei die mindestens eine Aufnahmebohrung (48.1-48.4) eines der Steckverbindungselemente vollständig durchdringt und das andere der Steckverbindungselemente zumindest teilweise durchdringt und wobei die Stiftverbindungen (47.1-47.4) als lösbare Verbindungen ausgebildet sind,
**dadurch gekennzeichnet, dass** die Stiftverbindungen als magnetische Stiftverbindungen (47.1-47.4) ausgebildet sind, wobei die Stiftelemente (49.1-49.4) oder eines der Steckverbindungselemente (33, 37) als Dauermagnet ausgebildet ist.

2. Bohrkrone nach Anspruch 1, **dadurch gekennzeichnet, dass** in einem oder mehreren Teilringabschnitten (18.1-18.4) und/oder im ersten Steckverbindungselement (33) eine Vertiefung (73.1-73.4) vorgesehen ist, die mit einem Korrosionsschutzmittel befüllbar ist.

3. Bohrkrone nach einem der Ansprüche 1 bis 2, **dadurch gekennzeichnet, dass** die mindestens eine Aufnahmebohrung (48.1-48.4) gleich tief oder tiefer als das mindestens eine Stiftelement (49.1-49.4) ausgebildet ist.

4. Bohrkrone nach einem der Ansprüche 1 bis 3, **dadurch gekennzeichnet, dass** die Aufnahmebohrung (48.1-48.4) das andere der Steckverbindungselemente (37) nicht vollständig durchdringt.

5. Bohrkrone nach Anspruch 4, **dadurch gekennzeichnet, dass** das andere der Steckverbindungselemente (37) eine Öffnung (53.1-53.4) aufweist, die die Aufnahmebohrung (48.1-48.4) mit der Innenseite (65) oder der Außenseite (54) der Bohrkrone (10) verbindet, wobei die Öffnung (53.1-53.4) kleiner als die Aufnahmebohrung (48.1-48.4) ist.

6. Bohrkrone nach einem der Ansprüche 1 bis 3, **dadurch gekennzeichnet, dass** die Aufnahmebohrung (48.1-48.4) das andere der Steckverbindungselemente (37) vollständig durchdringt.

7. Bohrkrone nach einem der Ansprüche 1 bis 6, **dadurch gekennzeichnet, dass** die Stiftelemente (49.1-49.4) in den Aufnahmebohrungen (48.1-48.4) klemmbar sind.

8. Bohrkrone nach einem der Ansprüche 1 bis 7, **dadurch gekennzeichnet, dass** zwischen den Schneidsegmenten (19.1-19.4) und dem Bohrschaftabschnitt (12) Führungsabschnitte (66.1-66.4) angeordnet sind, wobei die Führungsabschnitte (66.1-66.4) zumindest teilweise bündig an der Außenseite (54) und/oder der Innenseite (65) an die Schneidsegmente (19.1-19.4) anschließen.

9. Bohrkrone nach Anspruch 8, **dadurch gekennzeichnet, dass** die Führungsabschnitte (66.1-66.4) zumindest teilweise bündig an der Außenseite (54) an die Schneidsegmente (19.1-19.4) anschließen und zumindest teilweise als äußeres Steckverbindungselement (37) der Steckverbindung (38) ausgebildet sind.

10. Bohrkrone nach einem der Ansprüche 8 bis 9, **dadurch gekennzeichnet, dass** die Führungsabschnitte (66.1-66.4) zumindest teilweise bündig an der Innenseite (65) an die Schneidsegmente (19.1-19.4) anschließen und zumindest teilweise als inneres Steckverbindungselement (33) der Steckverbindung (38) ausgebildet sind.

## Claims

1. Drill bit (10) which is rotatable about a drilling axis (23), comprising
• a drilling-shaft portion (12) having a first plug-connection element (33), and
• a cutting portion (11) having a second plug-connection element (37) which, with the first plug-connection element (33), forms a plug connection (38) with an outer plug-connection element (37) and an inner plug-connection element (33), wherein the cutting portion (11) has multiple cutting sub-portions (16.1-16.4), which each have a ring sub-portion (18.1-18.4) and at least one cutting segment (19.1-19.4), and each ring sub-portion (18.1-18.4) forms a plug connection (35.1-35.4) with the first plug-connection element (33) and is connectable to the first plug-connection element (33) via a pin connection (47.1-47.4), which has at least one receiving bore (48.1-48.4) and at least one pin element (49.1-49.4) designed to be loose and insertable into the receiving bore (48.1-48.4), wherein the at least one receiving bore (48.1-48.4) completely extends through one of the plug-connection elements and at least partially extends through the other one of the plug-connection elements, and wherein the pin connections (47.1-47.4) are in the form of releasable connections,
**characterized in that** the pin connections are in the form of magnetic pin connections (47.1-47.4), wherein the pin elements (49.1-49.4) or one of the plug-connection elements (33, 37) are/is designed as a permanent magnet.

2. Drill bit according to Claim 1, **characterized in that** a depression (73.1-73.4) which is able to be filled with a corrosion-protection agent is provided in one or more ring sub-portions (18.1-18.4) and/or in the first plug-connection element (33).

3. Drill bit according to either of Claims 1 and 2, **characterized in that** the at least one receiving bore (48.1-48.4) is formed to be of the same depth as or deeper than the at least one pin element (49.1-49.4).

4. Drill bit according to one of Claims 1 to 3, **characterized in that** the receiving bore (48.1-48.4) does not completely extend through the other one of the plug-connection elements (37).

5. Drill bit according to Claim 4, **characterized in that** the other one of the plug-connection elements (37) has an opening (53.1-53.4) which connects the receiving bore (48.1-48.4) to the inner side (65) or to the outer side (54) of the drill bit (10), wherein the opening (53.1-53.4) is smaller than the receiving bore (48.1-48.4).

6. Drill bit according to one of Claims 1 to 3, **characterized in that** the receiving bore (48.1-48.4) completely extends through the other one of the plug-connection elements (37).

7. Drill bit according to one of Claims 1 to 6, **characterized in that** the pin elements (49.1-49.4) are able to be clamped in the receiving bores (48.1-48.4).

8. Drill bit according to one of Claims 1 to 7, **characterized in that** guide portions (66.1-66.4) are arranged between the cutting segments (19.1-19.4) and the drilling-shaft portion (12), wherein the guide portions (66.1-66.4) adjoin the cutting segments (19.1-19.4) at least partially flush with the outer side (54) and/or with the inner side (65).

9. Drill bit according to Claim 8, **characterized in that** the guide portions (66.1-66.4) adjoin the cutting segments (19.1-19.4) at least partially flush with the outer side (54) and are at least partially designed as an outer plug-connection element (37) of the plug connection (38).

10. Drill bit according to either of Claims 8 and 9, **characterized in that** the guide portions (66.1-66.4) adjoin the cutting segments (19.1-19.4) at least partially flush with the inner side (65) and are at least partially designed as an inner plug-connection element (33) of the plug connection (38).

## Revendications

1. Couronne de forage (10) pouvant tourner autour d'un axe de forage (23), présentant :
- une section de tige de forage (12) avec un premier élément de liaison enfichable (33) et
- une section de coupe (11) avec un deuxième élément de liaison enfichable (37), qui forme avec le premier élément de liaison enfichable (33) une liaison enfichable (38) avec un élément de liaison enfichable extérieur (37) et un élément de liaison enfichable intérieur (33), la section de coupe (11) présentant plusieurs sections de coupe partielles (16.1-16.4), qui présentent chacune une section annulaire partielle (18.1-18.4) et au moins un segment de coupe (19.1-19.4), et chaque section annulaire partielle (18.1-18.4) formant avec le premier élément de liaison enfichable (33) une liaison enfichable (35.1-35.4) et pouvant être reliée par l'intermédiaire d'une liaison par goupille (47.1-47.4), qui présente au moins un alésage de réception (48.1-48.4) et au moins un élément de goupille (49.1-49.4) réalisé sous forme lâche, qui peut être inséré dans l'alésage de réception (48.1-48.4), avec le premier élément de liaison enfichable (33), l'au moins un alésage de réception (48.1-48.4) traversant complètement l'un des éléments de liaison enfichable et traversant au moins partiellement l'autre des éléments de liaison enfichable, et les liaisons par goupille (47.1-47.4) étant réalisées sous forme de liaisons amovibles,
**caractérisée en ce que** les liaisons par goupille sont réalisées sous forme de liaisons par goupilles magnétiques (47.1-47.4), les éléments de goupille (49.1-49.4) ou l'un des éléments de liaison enfichable (33, 37) étant réalisés sous forme d'aimant permanent.

2. Couronne de forage selon la revendication 1, **caractérisée en ce que** dans une ou plusieurs sections annulaires partielles (18.1-18.4) et/ou dans le premier élément de liaison enfichable (33), il est prévu un creux (73.1-73.4) qui peut être rempli d'un agent anticorrosion.

3. Couronne de forage selon l'une quelconque des revendications 1 à 2, **caractérisée en ce que** l'au moins un alésage de réception (48.1-48.4) est réalisé à la même profondeur ou plus profondément que l'au moins un élément de goupille (49.1-49.4).

4. Couronne de forage selon l'une quelconque des revendications 1 à 3, **caractérisée en ce que** l'alésage de réception (48.1-48.4) ne traverse pas entièrement l'autre des éléments de liaison enfichable (37).

5. Couronne de forage selon la revendication 4, **caractérisée en ce que** l'autre des éléments de liaison enfichable (37) présente une ouverture (53.1-53.4) qui relie l'alésage de réception (48.1-48.4) au côté intérieur (65) ou au côté extérieur (54) de la couronne de forage (10), l'ouverture (53.1-53.4) étant plus petite que l'alésage de réception (48.1-48.4).

6. Couronne de forage selon l'une quelconque des revendications 1 à 3, **caractérisée en ce que** l'alésage de réception (48.1-48.4) traverse entièrement l'autre des éléments de liaison enfichable (37).

7. Couronne de forage selon l'une quelconque des revendications 1 à 6, **caractérisée en ce que** les éléments de goupille (49.1-49.4) peuvent être serrés dans les alésages de réception (48.1-48.4).

8. Couronne de forage selon l'une quelconque des revendications 1 à 7, **caractérisée en ce que** des sections de guidage (66.1-66.4) sont agencées entre les segments de coupe (19.1-19.4) et la section de tige de forage (12), les sections de guidage (66.1-66.4) se raccordant au moins partiellement en affleurement sur le côté extérieur (54) et/ou le côté intérieur (65) aux segments de coupe (19.1-19.4).

9. Couronne de forage selon la revendication 8, **caractérisée en ce que** les sections de guidage (66.1-66.4) se raccordent au moins partiellement en affleurement sur le côté extérieur (54) aux segments de coupe (19.1-19.4) et sont réalisées au moins partiellement sous forme d'élément de liaison enfichable extérieur (37) de la liaison enfichable (38).

10. Couronne de forage selon l'une quelconque des revendications 8 à 9, **caractérisée en ce que** les sections de guidage (66.1-66.4) se raccordent au moins partiellement en affleurement sur le côté intérieur (65) aux segments de coupe (19.1-19.4) et sont réalisées au moins partiellement sous forme d'élément de liaison enfichable intérieur (33) de la liaison enfichable (38).
